# FASCICULE DE BREVET EUROPEEN

(11) **EP 2 596 032 B1**
(45) Date de publication et mention de la délivrance du brevet: **16.04.2014**
(21) Numéro de dépôt: 11736054.5
(22) Date de dépôt: 19.07.2011
(51) Int. Cl.: C08F 214/18, C07C 67/08, C07C 69/54, C07C 69/653

(54) **PROCEDE DE PREPARATION DE NOUVEAUX COPOLYMERES A SQUELETTE POLYMERE FLUORE COMPRENANT DES CHAINES PENDANTES DU TYPE POLYOXYALKYLENE**
VERFAHREN ZUR HERSTELLUNG VON NEUEN COPOLYMEREN MIT EINER FLUORPOLYMER-HAUPTKETTE MIT HÄNGENDEN POLYOXYALKYLEN-KETTEN
PROCESS FOR PREPARING NOVEL COPOLYMERS WITH A FLUOROPOLYMER BACKBONE, COMPRISING POLYOXYALKYLENE PENDANT CHAINS

(30) Priorité: 21.07.2010 FR 1055964
(43) Date de publication de la demande: 29.05.2013
(73) Titulaire: Commissariat à l'Énergie Atomique et aux Énergies Alternatives, 75015 Paris (FR); Centre National de la Recherche Scientifique, 75016 Paris (FR)
(72) Inventeur: GALIANO, Hervé, F-37700 La Ville-aux-Dames (FR); AMEDURI, Bruno, F-34000 Montpellier (FR); VERGNAUD, Jérôme, F-66000 Perpignan (FR)
(74) Mandataire: Ilgart, Jean-Christophe
(86) Numéro de dépôt international: PCT/EP2011/062294
(87) Numéro de publication internationale: WO 2012/010569

(56) Documents cités:
- US-A1- 2003 100 791
- LIU ET AL: "Synthesis , characterization and electrochemical transport properties of the poly(ethyleneglycol)-grafted poly(vinylidenefluoride) nanoporous membranes", REACTIVE & FUNCTIONAL POLYMERS, vol. 47, no. 3, 2001, pages 201-213, XP002624496,

## Description

### DOMAINE TECHNIQUE

La présente invention a trait à un procédé de préparation d'un copolymère comprenant au moins deux types de motif répétitif : un motif répétitif issu de la polymérisation d'au moins un monomère comprenant un ou plusieurs atomes de fluor et un motif répétitif issu de la polymérisation d'au moins un monomère spécifique comprenant une chaîne pendante du type polyoxyalkylène, aux copolymères susceptibles d'être obtenus par ce procédé, à ces monomères spécifiques entrant dans la mise en oeuvre de ce procédé et à un procédé de préparation desdits monomères.

Les copolymères en question de par la coexistence de ces deux types de motif répétitif permettent d'accéder à une synergie de propriétés, que ce soit en termes de résistance mécanique, thermique et chimique grâce, notamment, au motif répétitif comprenant un ou plusieurs atomes de fluor ou en termes de capacité à établir des complexes avec des ions grâce notamment au motif répétitif comprenant une chaîne pendante du type polyoxyalkylène, ce qui permet d'envisager l'utilisation de ces copolymères dans un large panel d'applications.

Ainsi, ces copolymères peuvent trouver une application dans les domaines suivants :
- le domaine de la production d'énergie, en particulier des batteries secondaires, telles que les batteries au lithium, où les copolymères de l'invention peuvent entrer dans la constitution des électrolytes en tant qu'électrolyte gel et/ou en tant que séparateur ;
- le domaine de la purification de liquides contaminés par des ions à éliminer, dans lequel les copolymères peuvent entrer dans la constitution de membranes de filtration ;
- le domaine des latex aqueux, ces latex aqueux pouvant, en particulier, être utilisés comme tensioactifs dans des mousses extinctrices, des peintures ou des compositions cosmétiques ;
- le domaine biologique ou biotechnologique ;
- le domaine des adjuvants comptabilisants ou émulsifiants de systèmes comprenant des (co)polymères immiscibles.

### ÉTAT DE LA TECHNIQUE ANTÉRIEURE

Comme mentionné précédemment, la présence d'au moins un motif répétitif comprenant un ou plusieurs atomes de fluor dans un polymère contribue à lui conférer des propriétés intéressantes en termes de résistance mécanique, chimique et thermique tandis que la présence d'au moins un motif répétitif comprenant des groupes polyoxyalkylènes contribue à lui conférer des propriétés intéressantes en termes de capacité de complexation d'ions et des propriétés hydrophiles.

C'est donc tout naturellement que la recherche s'est tournée vers le développement de systèmes permettant de faire coexister ces deux types de motifs, pour accéder aux propriétés susmentionnées, que ce soit :
i) sous forme séparée par le biais de mélanges de polymères, dont au moins un des polymères comprend un type de motif répétitif et au moins un autre polymère comprend l'autre type de motif répétitif avec ajout éventuel d'un agent de comptabilisation ou émulsifiant ; ou
ii) sous forme associée au sein d'un même polymère par le biais de copolymères d'architecture particulière comprenant ces deux types de motif répétitif.

S'agissant de i), certains auteurs ont ainsi conçu des mélanges comprenant un polymère à base de motifs répétitifs fluorés et un polymère comprenant des motifs répétitif comprenant un groupe polyoxyalkylène.

C'est le cas de Sannier et al. (J.Power Sources, 158 (2006) 564-570), qui ont décrit des mélanges de deux polymères, respectivement, du polyfluorure de vinylidène (PVDF) et du polyoxyde d'éthylène. Toutefois, en raison de l'incompatibilité entre ces deux polymères, les auteurs ont dû adjoindre au système un agent du type phtalate de dibutyle.

C'est le cas également de Xiao et al. (Journal of Membrane Science, 334, (2009), 117-122), qui décrivent des membranes comprenant du PVDF en association avec un copolymère comprenant des blocs de polyoxyde d'éthylène et des blocs de polyméthacrylate de méthyle (symbolisés PMMA).

Dans ces deux cas, le système est complexe, car il nécessite l'adjonction de plusieurs ingrédients pour tenter de bénéficier à la fois des propriétés issus du PVDF et des propriétés issus des motifs oxyde d'éthylène.

S'agissant de ii), différentes architectures de copolymères ont été élaborées, dont des copolymères à blocs comprenant un bloc comprenant des motifs répétitifs oxyde d'éthylène et un bloc comprenant des motifs issus du fluorure de vinylidène et également des copolymères greffés comprenant une chaîne principale comprenant des motifs issus du fluorure de vinylidène et des greffons comprenant des groupes oxyde d'éthylène.

Ainsi, Kang et al., dans React. Funct.Polym 47 (2001), 201-213, décrit la préparation de copolymères greffés comprenant une chaîne principale en polyfluorure de vinylidène greffée par des greffons comprenant des motifs répétitifs méthacrylates porteurs de groupe polyoxyde d'éthylène, cette préparation comprenant :
- une étape d'ozonolyse d'un polyfluorure de vinylidène, de sorte à créer des groupes radicaux libres du type peroxyde ou hydroperoxyde aptes à générer des radicaux libres capables d'amorcer une réaction de polymérisation radicalaire en présence de monomères ;
- une étape de mise en contact avec le polyfluorure de vinylidène ainsi traité avec des monomères méthacrylates porteurs de groupes polyoxyde d'éthylène, la polymérisation de ces monomères se propageant à partir des groupes radicaux libres créés préalablement, moyennant quoi l'on obtient les copolymères greffés susmentionnés.

D'autres auteurs ont mis en place des techniques de greffage d'un polyfluorure de vinylidène impliquant une modification chimique préalable de ce polymère par l'action de réactifs chimiques.

Ceci est le cas de Chen et al., dans J.Polym.Sci., Part A :Polym.Chem. 44 (2006), 3071-3082, qui décrit un procédé comprenant les étapes suivantes :
- une étape de modification chimique d'un polyfluorure de vinylidène consistant à fixer par liaison covalente sur ledit polymère des groupes pendants du type diazo-3-acidométhylcyanonitrile, ces groupes étant susceptibles d'amorcer la polymérisation du méthacrylate de méthyle ;
- une étape de mise en contact du polyfluorure de vinylidène ainsi modifié avec du méthacrylate de méthyle, moyennant quoi l'on obtient un polyfluorure de vinylidène greffé par des greffons du type polyméthacrylate de méthyle (connu sous l'abréviation PVDF-g-PMMA) ; et
- une étape de transestérification des groupes esters portés par les greffons du type polyméthacrylate de méthyle avec un composé polyoxyde d'éthylène hydroxylé, moyennant quoi les greffons du type polyméthacrylate de méthyle comporte, à l'issue de cette étape, des groupes pendants du type polyoxyde d'éthylène.

Il ressort ainsi des techniques de préparation de copolymères greffés mentionnées ci-dessus une complexité assez importante, du fait qu'elles impliquent plusieurs étapes, ce qui peut s'avérer gênant pour la mise en oeuvre de ces techniques à l'échelle industrielle notamment pour des raisons de coût et de procédés (tels que les procédés impliquant l'utilisation d'ozone, de rayons X ou y ou les procédés de transestérification nécessitant l'utilisation de complexes métalliques connus pour être toxique et peu respectueux de l'environnement).

Les auteurs se sont ainsi fixé comme objectif de mettre en place un nouveau procédé de préparation de copolymères comprenant une chaîne principale comprenant au moins un motif répétitif issu de la polymérisation d'un monomère comprenant un ou plusieurs atomes de fluor et au moins un motif répétitif issu de la polymérisation d'un monomère comprenant un groupe pendant du type polyoxyalkylène, ce procédé étant simple de mise en oeuvre notamment en terme du nombre d'étapes nécessaires à la préparation du copolymère et n'impliquant pas d'étapes de modification chimique de la chaîne principale, tel que cela est le cas des nombreux procédés de préparation de l'art antérieur impliquant une étape de greffage de la chaîne principale.

### EXPOSÉ DE L'INVENTION

Pour ce faire, les auteurs de la présente invention ont mis en place un procédé impliquant une simple étape de copolymérisation mettant en oeuvre notamment un monomère spécifique innovant comportant un groupe pendant du type polyoxyalkylène.

L'invention a ainsi trait à un procédé de préparation d'un copolymère comprenant au moins un motif répétitif répondant à la formule (I) suivante : 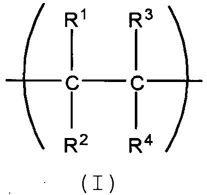 dans laquelle :
- R¹, R², R³ et R⁴ représentent indépendamment un atome d'hydrogène, un atome d'halogène, un groupe perfluoroalkyle ou un groupe perfluoroalcoxy, à condition que l'un au moins des groupes R¹ à R⁴ représente un atome de fluor, un groupe perfluoroalkyle ou un groupe perfluoroalcoxy,
et comprenant au moins un motif répétitif répondant à la formule (II) suivante : 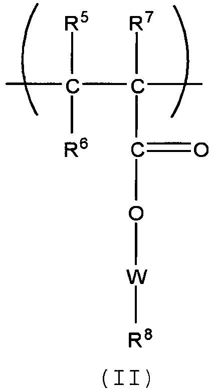 dans laquelle :
- R⁵, R⁶, R⁷ représentent, indépendamment, un atome d'hydrogène, un atome d'halogène, un groupe alkyle, un groupe perfluoroalkyle, sous réserve que l'un au moins des groupes R⁵ à R⁷ représente un atome de fluor ou un groupe perfluoroalkyle;
*W représente un groupe polyoxyalkylène ; et
*R⁸ représente un groupe alkyle ou un atome d'hydrogène,
ledit procédé comprenant une étape de copolymérisation d'au moins un monomère de formule (III) suivante : 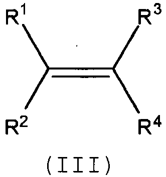 et d'au moins un monomère de formule (IV) suivante : 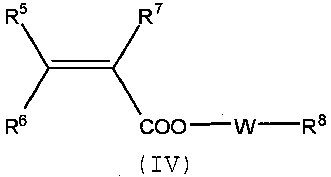 les groupes R¹, R², R³, R⁴, R⁵, R⁶, R⁷, W et R⁸ étant tels que définis ci-dessus.

Avant d'entrer plus en détail dans la description, nous proposons les définitions suivantes.

Par groupe alkyle, on entend classiquement, dans ce qui précède et ce qui suit, un groupe alkyle linéaire ou ramifié de formule -CₙH₂ₙ₊₁, n correspondant au nombre d'atomes de carbone, ce nombre pouvant aller de 1 à 5, un tel groupe pouvant être un groupe méthyle.

Par groupe perfluoroalkyle, on entend classiquement, dans ce qui précède et ce qui suit, un groupe alkyle dont tous les atomes d'hydrogène sont remplacés par des atomes de fluor, ce groupe répondant à la formule -CₙF₂ₙ₊₁, n correspondant au nombre d'atomes de carbone, ce nombre pouvant aller de 1 à 5, un tel groupe pouvant être un groupe de formule -CF₃.

Par groupe perfluoroalcoxy, on entend, classiquement, dans ce qui précède et ce qui suit, un groupe -O-alkyle dont tous les atomes d'hydrogène sont remplacés par des atomes de fluor, ce groupe répondant à la formule -O-CₙF₂ₙ₊₁, n correspondant au nombre d'atomes de carbone, ce nombre pouvant aller de 1 à 5, un tel groupe pouvant être un groupe de formule -O-CF₃

Par groupe polyoxyalkylène, on entend classiquement, dans ce qui précède et ce qui suit, un groupe comprenant un enchaînement de motifs de formule -Z-O-, Z étant un groupe alkylène.

On précise que, par groupe alkylène, on entend classiquement un groupe alkyle formant un pont entre deux autres groupes, c'est-à-dire dont deux atomes d'hydrogène sont substitués pour former ledit pont, un exemple de groupe alkylène pouvant être un groupe éthylène de formule -CH₂-CH₂-.

Un exemple de groupe polyoxyalkylène peut être un groupe polyoxyéthylène, à savoir un groupe comprenant un enchaînement de motifs de formule -CH₂-CH₂-O-, ce groupe pouvant avoir une masse molaire allant de 130 à 2000 g/mol.

Plus spécifiquement, un groupe polyoxyéthylène particulier peut être un groupe -(CH₂-CH₂-O)₃- .

Grâce à la découverte par les auteurs de l'invention d'un monomère spécifique (le monomère de formule (IV) définie ci-dessus) apte à se copolymériser avec des monomères de formule (III) définie ci-dessus et permettant une incorporation significative de ce momonomère de formule (III) dans le copolymère résultant, les auteurs ont ainsi pu concevoir un nouveau procédé de polymérisation de mise en oeuvre simple et peu coûteuse.

Selon l'invention, selon un mode de réalisation particulier, concernant le motif répétitif de formule (I) et le monomère de formule (III), au moins deux des groupes R¹ à R⁴ peuvent représenter, avantageusement des atomes de fluor. Selon ce mode de réalisation, R¹ et R² peuvent représenter un atome d'hydrogène et R³ et R⁴ peuvent représenter un atome de fluor.

Ainsi, un motif répétitif particulier tombant sous le coup de la définition générale des motifs répétitifs de formule (I) peut correspondre à un motif répétitif de formule (V) suivante : 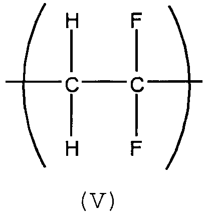 moyennant quoi le monomère, dont est issu ce motif répétitif, répond à la formule (VI) suivante : 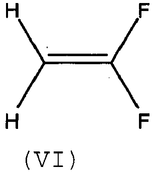 ce monomère étant connu sous le nom de fluorure de vinylidène.

D'autres motifs répétitifs particuliers tombant sous le coup de la définition générale des motifs répétitifs de formule (I) peuvent correspondre aux motifs particuliers suivantes :
- un motif répétitif pour lequel R¹, R² et R⁴ sont des atomes de fluor et R³ est un atome de chlore ou de brome, auquel cas le monomère, dont est issu ce motif répétitif, est le chlorotrifluoroéthylène (connu sous l'abréviation CTFE) ou le bromotrifluoréthylène ;
- un motif répétitif pour lequel R¹, R³ et R⁴ sont des atomes de fluor et R² est un groupe -CF₃, auquel cas le monomère, dont est issu ce motif répétitif, est l'hexafluoropropylène (connu sous l'abréviation HFP) ;
- un motif répétitif pour lequel R¹, R² et R³ sont des atomes de fluor et R⁴ est un atome d'hydrogène, auquel cas le monomère, dont est issu ce motif répétitif, est trifluoroéthylène (connu sous l'abréviation TrFE) ;
- un motif répétitif pour lequel R¹ à R⁴ sont des atomes de fluor, auquel cas le monomère, dont est issu ce motif répétitif, est le tétrafluoroéthylène (connu sous l'abréviation TFE) ;
- un motif répétitif pour lequel R¹ à R³ sont des atomes de fluor et R⁴ est un groupe -OCF₃ ;
- un motif répétitif pour lequel R¹ à R³ sont des atomes d'hydrogène et R⁴ est un atome de fluor ;
- un motif répétitif pour lequel R¹ à R³ sont des atomes d'hydrogène et R⁴ est un groupe -CF₃;
- un motif répétitif pour lequel R¹ et R³ sont des atomes de fluor et R² et R⁴ sont des atomes de chlore ;
- un motif répétitif pour lequel R¹ et R² sont des atomes de fluor, R³ est un atome d'hydrogène et R⁴ est un atome de brome.

Selon l'invention, concernant le motif répétitif de formule (II) et le monomère de formule (IV), W peut être un groupe polyoxyéthylène, c'est-à-dire un groupe comprenant un enchaînement de motif répétitif de formule -CH₂-CH₂-O-. A titre d'exemple, W peut être un groupe de formule -(CH₂-CH₂-O)₃-.

Avantageusement, lorsque R⁵ et R⁶ sont des atomes d'hydrogène, R⁷ est un groupe perfluoroalkyle.

En particulier, R⁷ peut représenter un groupe perfluoroalkyle, tel qu'un groupe -CF₃ et R⁸ un groupe alkyle, par exemple, du type méthyle.

Ainsi, un motif particulier tombant sous le coup de définition générale des motifs répétitifs de formule (II) peut correspondre à un motif répétitif de formule (VII) suivante : 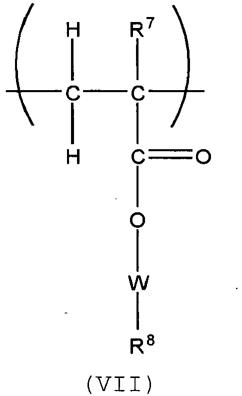 dans laquelle R⁷ est un groupe perfluoroalkyle, W est un groupe polyoxyéthylène et R⁸ est un groupe alkyle, par exemple, un groupe méthyle ou un atome d'hydrogène,
moyennant quoi le monomère, dont est issu ce motif répétitif, répond à la formule (VIII) suivante : 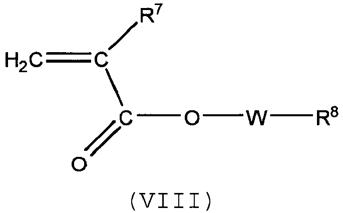 R⁷, R⁸ et W étant tels que définis ci-dessus.

En particulier, R⁷ peut être un groupe -CF₃ et R⁸ peut être un groupe -CH₃ ou un atome d'hydrogène.

Selon d'autres modes de réalisation particuliers :
- R⁵ est un atome de fluor, R⁶ est un atome d'hydrogène et R⁷ est un groupe -CF₃ ;
- R⁵ est un atome de fluor, R⁶ est un atome d'hydrogène et R⁷ est un atome de fluor ; ou
- R⁵ et R⁶ sont des atomes de fluor et R⁷ est un groupe -CF₃.

L'étape de polymérisation est réalisée avantageusement, en présence d'un amorceur de polymérisation radicalaire, lequel peut être choisi parmi :
* les composés peroxypivalates, tels que peroxypivalate de *tert*-butyle, le peroxypyvalate de t-amyle ;
* les composés peroxydes, tels que le peroxyde de di-*tert*-butyle, le (tert-butylperoxy)-2,5-diméthylhexane et le peroxyde de benzoyle ;
* les composés persulfates, tels que le persulfate de potassium, le persulfate de sodium ou le persulfate d'ammonium ;
* les composés azoïques, tels que l'azobisisobutyronitrile (connu sous l'abréviation AiBN) ;
* les composés carbonates, tels que le peroxydicarbonate de bis(4-tert-butyle cyclohexyle).

L'étape de polymérisation est réalisée également, de préférence, en présence d'un solvant organique, tel qu'un solvant choisi parmi les solvants suivants :
- l'acétonitrile ;
- un solvant halogéné, tel que le 1,1,1,3,3-pentafluorobutane, le trifluorotoluène, le perfluorohexane, le perfluoroheptane, le 1,1,2-trifluorotrichloroéthane ;
- un solvant cétone, tel que la cyclohexanone ;
- un solvant ester, tel que l'acétate de méthyle ;
- un solvant alcool, tel que l'hexafluoroisopropanol ; et
- les mélanges de ceux-ci.

L'étape de polymérisation peut être réalisée également, en présence d'un agent de transfert de chaîne, auquel cas cette étape de polymérisation pourra être considérée comme faisant partie des techniques de polymérisation radicalaire contrôlée, dans la mesure où l'agent de transfert de chaîne va permettre de réguler la masse molaire des chaînes de polymères obtenues.

Plus précisément, la polymérisation radicalaire contrôlée permet de réduire les réactions de désactivation de l'espèce radicalaire en croissance, réactions qui, dans la polymérisation radicalaire classique (c'est-à-dire, une polymérisation radicalaire ne faisant pas intervenir d'agents de contrôle ou de contre-radical), interrompent la croissance de la chaîne polymère de façon irréversible et sans contrôle par recombinaison de radicaux ou dismutation.

Grâce à l'action d'un agent de contrôle du type agent de transfert de chaîne, ce dernier peut bloquer de façon transitoire et réversible, l'espèce radicalaire en croissance en réagissant avec cette dernière pour former un groupe lié à l'espèce en croissance par une liaison de faible énergie de dissociation. Ceci permet ainsi de redémarrer la polymérisation et d'obtenir ainsi de meilleurs taux de conversion, une masse molaire moyenne en nombre (ou en masse) contrôlée et un indice de polymolécularité plus faible qu'en polymérisation radicalaire classique.

Des agents de transfert de chaîne utilisables pour le procédé de l'invention peuvent être des composés halogénures d'alkyle, en particulier des composés du type iodure de perfluoroalkyle, tels que CF₃I, C₄F₉I, C₆F₁₃I, C₂F₅I, (CF₃)₂CFI, IC₄F₈I ou IC₆F₁₂I . Qui plus est, ces agents de transfert de chaîne permettent le greffage en extrémité de chaîne de polymère de groupements perfluoralkyles, qui vont permettre de déterminer la masse molaire du copolymère obtenu par spectroscopie du fluor RMN ¹⁹F.

Selon la nature du solvant utilisé et des monomères, la polymérisation peut se dérouler selon le principe de la polymérisation en solution (dès lors que l'un au moins des monomères est soluble dans le solvant utilisé), le principe de la polymérisation en suspension (dès lors que les monomères et les copolymères formés sont insolubles dans le dispersant) ou le principe de la polymérisation en émulsion (ce qui se traduit par l'apparition de micelles « piégeant » les molécules de monomères avant polymérisation). Pour la polymérisation en émulsion, un amorceur de radicaux libres particulièrement approprié est un composé persulfate, tel qu'un composé persulfate de sodium, de potassium ou d'ammonium.

Lorsque l'un au moins des monomères se présente sous forme gazeuse (ce qui est le cas, notamment, du fluorure de vinylidène, du trifluoréthylène, du chlorotrifluoroéthylène ou de l'hexafluoropropène), l'étape de polymérisation peut être réalisée dans un autoclave, par exemple sous pression, la pression dans l'autoclave pouvant aller de 5 à 85 bars, de préférence de 10 à 55 bars, et une température pouvant aller de 40 à 150°C.

Outre le fait que le procédé de l'invention est innovant, les copolymères obtenus par ce procédé sont également nouveaux, du fait de l'incorporation dans ces copolymères d'au moins un motif répétitif issu de la polymérisation d'au moins un monomère de formule (IV) susmentionnée.

Ainsi, l'invention a trait, selon un deuxième objet, à des copolymères comprenant au moins un motif répétitif répondant à la formule (I) suivante : 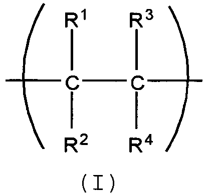 dans laquelle :
- R¹, R², R³ et R⁴ représentent indépendamment un atome d'hydrogène, un atome d'halogène, un groupe perfluoroalkyle ou un groupe perfluoroalcoxy, à condition que l'un au moins des groupes R¹ à R⁴ représente un atome de fluor, un groupe perfluoroalkyle ou un groupe perfluoroalcoxy,
et comprenant au moins un motif répétitif répondant à la formule (II) suivante : 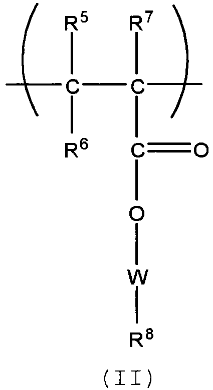 dans laquelle :
*R⁵, R⁶, R⁷ représentent, indépendamment, un atome d'hydrogène, un atome d'halogène, un groupe alkyle, un groupe perfluoroalkyle, sous réserve que l'un au moins des groupes R⁵ à R⁷ représente un atome de fluor ou un groupe perfluoroalkyle ;
*W représente un groupe polyoxyalkylène ; et
*R⁸ représente un groupe alkyle ou un atome d'hydrogène.

Comme précédemment pour le procédé décrit ci-dessus, concernant le motif répétitif de formule (I), au moins deux des groupes R¹ à R⁴ peuvent représenter, avantageusement des atomes de fluor. Selon ce mode de réalisation, R¹ et R² peuvent représenter un atome d'hydrogène et R³ et R⁴ peuvent représenter un atome de fluor.

Ainsi, un motif répétitif particulier tombant sous le coup de la définition générale des motifs répétitifs de formule (I) peut correspondre à un motif répétitif de formule (V) suivante :

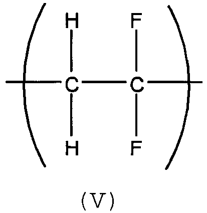

Selon l'invention, concernant le motif répétitif de formule (II), W peut être un groupe polyoxyéthylène, c'est-à-dire un groupe comprenant un enchaînement de motif répétitif de formule -CH₂-CH₂-O, la chaîne polyoxyéthylène pouvant présenter une masse molaire variant de 130 à 2000 g.mol⁻¹.

A titre d'exemple, W peut être un groupe de formule -(CH₂-CH₂-O)₃-.

Avantageusement, lorsque R⁵ et R⁶ sont des atomes d'hydrogène, R⁷ est un groupe perfluoroalkyle.

En particulier, R⁷ peut représenter un groupe perfluoroalkyle, tel qu'un groupe -CF₃ et R⁸ est un groupe alkyle, par exemple, du type méthyle.

Ainsi, un motif répétitif particulier tombant sous le coup de la définition générale des motifs répétitifs de formule (II) peut correspondre à un motif de formule (VII) suivante : 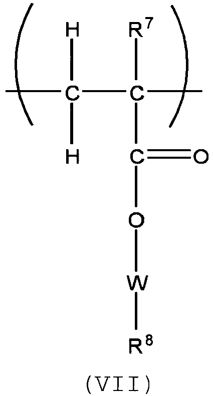 dans laquelle R⁷ est un groupe perfluoroalkyle, tel qu'un groupe -CF₃, W est un groupe polyoxyéthylène et R⁸ est un groupe alkyle, par exemple, un groupe méthyle.

Selon d'autres modes de réalisation particuliers :
- R⁵ est un atome de fluor, R⁶ est un atome d'hydrogène et R⁷ est un groupe -CF₃ ;
- R⁵ est un atome de fluor, R⁶ est un atome d'hydrogène et R⁷ est un atome de fluor ; ou
- R⁵ et R⁶ sont des atomes de fluor et R⁷ est un groupe -CF₃.

D'autres motifs répétitifs particuliers tombant sous le coup de la définition générale des motifs répétitifs de formule (I) peuvent correspondre aux motifs particuliers suivants :
- un motif répétitif pour lequel R¹, R² et R⁴ sont des atomes de fluor et R³ est un atome de chlore ou de brome ;
- un motif répétitif pour lequel R¹, R³ et R⁴ sont des atomes de fluor et R² est un groupe -CF₃;
- un motif répétitif pour lequel R¹, R² et R³ sont des atomes de fluor et R⁴ est un atome d'hydrogène ;
- un motif répétitif pour lequel R¹ à R⁴ sont des atomes de fluor ;
- un motif répétitif pour lequel R¹ à R³ sont des atomes de fluor et R⁴ est un groupe -OCF₃;
- un motif répétitif pour lequel R¹ à R³ sont des atomes d'hydrogène et R⁴ est un atome de fluor ;
- un motif répétitif pour lequel R¹ à R³ sont des atomes d'hydrogène et R⁴ est un groupe -CF₃ ;
- un motif répétitif pour lequel R¹ et R³ sont des atomes de fluor et R² et R⁴ sont des atomes de chlore ;
- un motif répétitif pour lequel R¹ et R² sont des atomes de fluor, R³ est un atome d'hydrogène et R⁴ est un atome de brome.

Les copolymères de l'invention peuvent comprendre de 40 à 99 % molaire de motif répétitif de formule (I) et de 1 à 60% molaire de motif répétitif de formule (II).

La masse molaire des copolymères de l'invention peut aller de 600 à 350 000 g.mol⁻¹.

Les copolymères de l'invention peuvent être éventuellement des copolymères aléatoires ou statistiques.

De tels copolymères présentent des caractéristiques de cristallinité moindres par rapport à un polymère ne comprenant que des motifs de formule (I) telle que définie ci-dessus grâce à la présence de motifs comprenant une chaîne pendante du type polyoxalkylène, lesdites chaînes étant, en parallèle, aptes à complexer des ions ce qui rend ces copolymères particulièrement attractifs pour constituer des membranes échangeuses d'ions, que ce soit pour :
- le domaine de la production d'énergie, en particulier des batteries secondaires, telles que les batteries au lithium, où les copolymères de l'invention peuvent entrer dans la constitution des électrolytes en tant qu'électrolyte gel et/ou en tant que séparateur ; ou
- le domaine de la purification de liquides contaminés par des ions à éliminer, dans lequel les copolymères peuvent entrer dans la constitution de membranes de filtration.

D'autres applications de ces copolymères peuvent être également envisagées telles que le domaine des adjuvants de compatibilisation ou émulsifiants de mélanges polymères.

Comme mentionné ci-dessus, le procédé de l'invention a pu être mis en place grâce à la conception de nouveaux monomères, lesquels monomères répondent à la formule (IV) suivante : 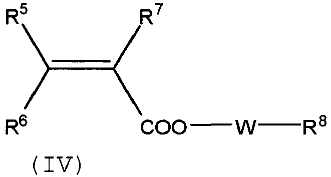 les groupes R⁵, R⁶, R⁷, R⁸ et W étant tels que définis ci-dessus.

Ces monomères peuvent être préparés par un procédé comprenant une étape de réaction d'un monomère de formule (XVII) suivante : 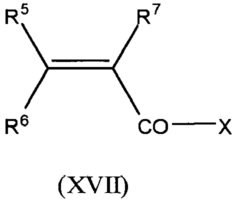 dans laquelle R⁵, R⁶, R⁷ sont tels que définis ci-dessus et X est un atome d'halogène, un groupe -OH, ce monomère pouvant exister sous forme de sel, avec un composé de formule (XVIII) suivante :

Z-W-R⁸ (XVIII)

dans laquelle :
*Z est un groupe apte à réagir avec le groupe -CO-X du monomère défini ci-dessus pour former un groupe ester ;
*W et R⁸ sont tels que définis ci-dessus.

En particulier, Z peut être un groupe hydroxyle -OH.

L'étape d'estérification peut être réalisée en milieu acide, notamment en présence d'un acide minéral tel que l'acide chlorhydrique, un acide organique et plus particulièrement un acide sulfonique, tel que l'acide méthanesulfonique, l'acide paratoluènesulfonique et l'acide trifluorométhanesulfonique (connu également sous le nom d'acide triflique).

Lorsque X correspond à -OH, l'étape d'estérification peut aussi être réalisée en présence d'un agent de couplage, tel que le dicyclohexylcarbodiimide (symbolisé DCC ou DCCI), un agent de couplage étant apte à activer la fonction carboxyle de sorte à faciliter l'étape d'estérification.

L'invention va, à présent, être décrite en référence aux exemples ci-dessous donnés à titre illustratif et non limitatif.

### EXPOSÉ DÉTAILLÉ DE MODES DE RÉALISATION PARTICULIERS

Les exemples qui suivent illustrent différents modes de préparation de monomères et de copolymères conformes à l'invention.

Les produits obtenus ont pu, selon les cas, être caractérisés par spectroscopie de résonance magnétique nucléaire (RMN) du fluor ¹⁹F et de l'hydrogène ¹H. Les spectres ont été enregistrés sur un spectromètre Bruker AC 400 (400 MHz), en utilisant de l'acétone ou du chloroforme deutérié comme solvant et du triméthylsilane (TMS) comme référence pour les spectres RMN ¹H (ou RMN ¹⁹F). Les constantes de couplage et les déplacements chimiques sont respectivement donnés en Hz et ppm. Les conditions expérimentales pour les spectres RMN ¹H (ou RMN ¹⁹F) sont les suivantes : angle de flip de 90°(30°), temps d'acquisition 4,5 s (ou 0,7 s), retard de pulse 2 s (ou 5 s), nombre de scans 16 (ou 64) et une largeur de pulse de 5 µs pour la RMN du ¹⁹F.

Les produits obtenus ont été, selon les cas, caractérisés par chromatographie d'exclusion stérique (symbolisée SEC) à l'aide d'un appareil Spectra-Physics équipé de deux colonnes PLgel 5 µm de Polymer Laboratories et d'un détecteur à indice de réfraction Spectra Physics SP8430. Le diméthylformamide contenant 0, 1M de LiCl à une température de 70°C ou le tétrahydrofurane à température ambiante ont été choisis comme éluants avec un flux de 0,8 mL.min⁻¹. Les étalons sont des polystyrènes isomoléculaires fournis par Polymer Laboratories.

### EXEMPLE 1

Cet exemple illustre la synthèse d'un monomère de formule suivante : 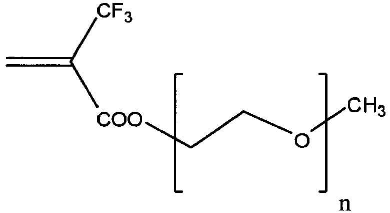 n correspondant au nombre de motifs répétitifs pris entre crochet, à savoir n étant égal à 50 à partir des réactifs principaux suivants :
*le poly(oxyéthylène) α-hydroxylé-ω-méthoxylé (symbolisé ci-après HO-POE-CH₃) de formule suivante : 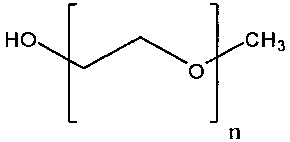 n ayant la même signification que celle donnée ci-dessus et ce composé présentant une masse molaire de 2200 g/mol ;
*l'acide α-trifluorométhacrylique de formule suivante : 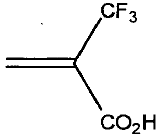
*l'acide méthanesulfonique de formule CH₃-SO₃H

Le protocole opératoire précis est le suivant.

Dans un appareil de Dean-Stark, on mélange 52,0 g (0,026 mole) de HO-POE-CH₃, 18,16 g (0,129 mol) d'acide α-trifluorométhacrylique, 0,52 g (5,4 mmole) d'acide méthanesulfonique dans 200 mL de toluène. Après 48 heures à reflux, le mélange brut réactionnel est refroidi et concentré par évaporation du toluène. Le macromonomère H₂C=C(CF₃)CO₂-POE est ensuite purifié par précipitation dans du diéthyléther.

Après séchage du produit jusqu'à masse constante, 46,4 g de poudre blanche ont été obtenus avec un rendement de 90%.

Le produit obtenu a été analysé par analyse RMN ¹H, le spectre montrant :
- l'apparition d'un triplet à environ 4,3 ppm, qui peut être attribué au groupe -CH₂- situé en position α de l'oxygène du groupe ester -COO- ;
- la présence de deux singulets respectivement centrés à 6,4 et 6,7 ppm, qui peuvent être attribués aux protons de la double liaison.

Le produit obtenu a également été analysé par RMN ¹⁹F, qui montre un signal à -65,8 ppm, ce signal étant caractéristique du groupe -CF₃.

### EXEMPLE 2

Cet exemple illustre la synthèse d'un monomère de formule suivante : 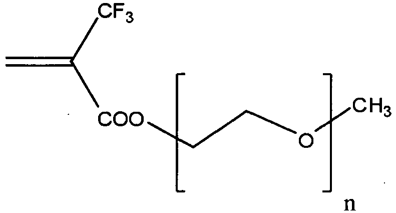 n correspondant au nombre de motifs répétitifs pris entre crochet (à savoir, 50 dans ce cas) à partir des réactifs principaux suivants :
*le poly(oxyéthylène) ω-hydroxylé (symbolisé ci-après HO-POE-CH₃) de formule suivante : 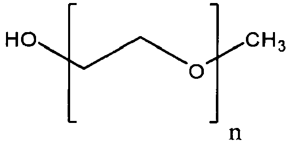 n ayant la même signification que celle donnée ci-dessus et ce composé présentant une masse molaire de 2200 g/mol ;
*l'acide α-trifluorométhacrylique de formule suivante : 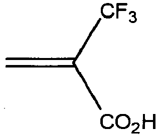
*l'acide p-toluènesulfonique de formule suivante :

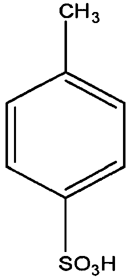

Le protocole opératoire précis est le suivant.

Dans un appareil de Dean-Stark, on mélange 31,2 g (0,016 mole) de HO-POE-CH₃, 10,9 g (0,077 mol) d'acide α-trifluorométhacrylique, 0,60 g (3,4 mmole) d'acide paratoluènesulfonique dans 100 mL de toluène. Après 48 heures à reflux, le brut réactionnel est refroidi et concentré par évaporation du toluène. Le macromonomère H₂C=C(CF₃)CO₂-POE est ensuite purifié par précipitation dans du diéthyléther.

Après séchage du produit jusqu'à masse constante, 29,2 g de poudre blanche ont été obtenus avec un rendement de 73%.

Les spectres RMN ¹H et RMN ¹⁹F obtenus présentent des caractéristiques similaires à ceux obtenus pour le monomère de l'exemple 1.

### EXEMPLE 3

Cet exemple illustre la synthèse d'un monomère de formule suivante : 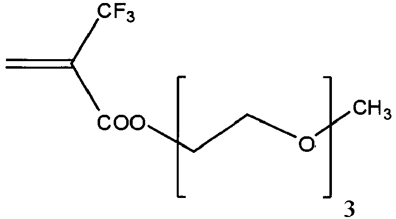 dénommé α-trifluorométhacrylate de trioxa-3,6,9-décyle à partir des réactifs principaux suivants :
*le trioxa-3,6,9-decan-1-ol de formule suivante : 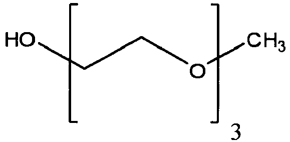
*l'acide α-trifluorométhacrylique de formule suivante : 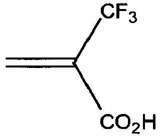
*l'acide méthanesulfonique de formule suivante CH₃-SO₃H

Le protocole opératoire précis est le suivant.

Dans un appareil de Dean-Stark, on mélange 10,0 g (60,9 mmol) de trioxa-3, 6, 9-decan-1-ol, 17,0 g (121,4 mmol) d'acide α-trifluorométhacrylique, 290 mg (3,02 mmole) d'acide méthanesulfonique, 10 mg (4,5 mmol) de 2,6-di-tert-butyl-4-méthylphénol, dans 120 mL. de toluène à reflux à 140°C pendant 2 jours. Le mélange brut réactionnel est ensuite refroidi et concentré par évaporation sous vide du toluène. L'excès d'acide α-trifluorométhacrylique est éliminé par sublimation.

L'α-trifluorométhacrylate de trioxa-3,6,9-décyle est finalement obtenu sous forme d'un liquide incolore après distillation sous pression (65°C, 40 mbar) avec un rendement de 50% (8,8 g).

### EXEMPLE 4

Cet exemple illustre la préparation d'un copolymère par copolymérisation radicalaire du monomère fluorure de vinylidène CH₂=CF₂ avec le monomère préparé dans l'exemple 1.

La copolymérisation est réalisée dans un autoclave en Hastelloy (HC 276) équipé d'un manomètre, d'un disque de rupture, d'un agitateur mécanique, de vannes d'introduction de gaz et de dégazage dans un réacteur de 100 mL.

Le réacteur est préalablement dégazé suivi de trois cycles vide-argon.

Ensuite, le mélange réactionnel comprenant 21,2 g (9,7 mmol) de monomère préparé selon l'exemple 1, 0,58 g (4,0 mmol) de peroxypivalate de tert-butyle et 50 mL d'acétonitrile est introduit dans le réacteur.

Puis, le réacteur est de nouveau mis sous argon puis dégazé avant d'introduire 18 g (0,28 mol) de fluorure de vinylidène (VDF). Le rapport molaire initial VDF/monomère de l'exemple 1 est de 98/2 mol/mol. Le réacteur est chauffé de façon progressive sous agitation à 75°C et maintenu à cette température pendant au moins 6 heures. Au cours du chauffage, la pression augmente jusqu'à un maximum de 28 bars puis chute jusqu'à 22 bars.

Le réacteur est ensuite refroidi, introduit dans un bain de glace pendant 40 minutes puis dégazé.

Après ouverture du réacteur, le solvant du brut réactionnel est évaporé, puis le copolymère est précipité dans 500 mL de pentane froid sous forte agitation, ce qui conduit, après filtration, à une poudre blanche (13,7 g) (35% de rendement).

Les analyses RMN ont permis de déterminer que 99,6% molaire de VDF et 0,4% molaire de monomère de l'exemple 1 ont été incorporés dans le copolymère.

L'analyse SEC (THF, 30°C, étalon polystyrène) montre un signal correspondant à une masse molaire moyenne en nombre de 9700 g/mol, l'indice de polymolécularité étant de 1,83.

### EXEMPLE 5

L'appareillage utilisé dans cet exemple est identique à celui utilisé dans l'exemple 4.

Les réactifs introduits dans le réacteur sont les suivants :
- 5,08 g (2,4 mmol) du monomère préparé dans l'exemple 1;
- 0, 75 g (4, 8 mmol) de peroxyde de t-butyle ;
- 60 mL d'acétonitrile.

Après avoir mis le réacteur sous argon suivi d'un dégazage, sont ajoutés 18 g (0,28 mol) de fluorure de vinylidène. Le rapport molaire initial VDF/monomère de l'exemple 1 est de 98/2 mol/mol. Le réacteur est chauffé de façon progressive sous agitation à 140°C et maintenu à cette température pendant au moins 8 heures. Au cours du chauffage, une réaction exothermique est observée se caractérisant, dans un premier temps, par une augmentation de la pression (jusqu'à une valeur maximale de 43 bars) suivie ensuite d'une chute de la pression (jusqu'à une valeur de 18 bars).

Après dégazage, 12 grammes de VDF sont relargués (le taux de conversion étant ainsi de 33%), et après ouverture, le produit obtenu est purifié par précipitation dans du pentane.

Les analyses RMN ¹H ont permis de déterminer que 99% molaire de VDF et 1% molaire de monomère de l'exemple 1 ont été incorporés dans le copolymère.

L'analyse SEC (THF, 30°C, étalon polystyrène) montre un signal correspondant à une masse molaire moyenne en nombre de 7000 g/mol, l'indice de polymolécularité étant de 1,98.

### EXEMPLE 6

Cet exemple a été réalisé dans le 1,1,1,3,3-pentafluorobutane avec les mêmes proportions de VDF, de monomère de l'exemple 3 et de t-BPPi que pour l'exemple 4.

Au cours du chauffage, une réaction exothermique est observée se caractérisant, dans un premier temps, par une augmentation de la pression (jusqu'à une valeur maximale de 12 bars) suivie ensuite d'une chute de la pression (jusqu'à une valeur de 8 bars) .

En fin d'expérience, le mélange réactionnel se présente sous la forme d'une mousse blanche. Le 1,1,1,3,3-pentafluorobutane est ensuite éliminé par distillation, le résidu résultant est solubilisé dans le diméthylformamide (DMF) puis précipité dans 400 mL de méthanol. L'ensemble est filtré et le filtrat est de nouveau concentré pour être précipité dans le pentane pour donner un deuxième précipité, qui est ensuite isolé.

L'analyse RMN ¹H du deuxième précipité dans CDCl₃ montre les pics caractéristiques des motifs répétitifs issus du monomère de l'exemple 3 et des motifs issus du VDF.

L'analyse SEC (THF, 30°C, étalon polystyrène) montre un signal correspondant à une masse molaire moyenne en nombre de 10100 g/mol, l'indice de polymolécularité étant de 1,86.

### EXEMPLE 7

Dans des conditions similaires à celles de l'exemple 4, sont introduits dans le réacteur 300 mL en Hastelloy, 56,5 g (19,7 mmol) de monomère préparé à l'exemple 3, 0,22 g (1,4 mmol) de peroxypivalate de t-butyle, 0,21 g de peroxyde de t-butyle, 150 mL d'eau désionisée et 5 mL de 1,1,1,3,3-pentafluorobutane.

Puis, le réacteur est de nouveau mis sous argon puis dégazé avant d'introduire 6 g (93,7 mmol) de fluorure de vinylidène. Le rapport molaire initial VDF/monomère de l'exemple 1 est de 82/18 mol/mol. Le réacteur est chauffé de façon progressive sous agitation à 74°C pendant 3 heures dans un premier temps puis, à 140°C à cette température pendant 8 heures.

Au cours du chauffage, la pression augmente jusqu'à un maximum de 43 bars puis chute jusqu'à 12 bars.

Après dégazage, 1 gramme de VDF est relargué (le taux de conversion étant ainsi de 78%) et après ouverture du réacteur, le milieu réactionnel se présente sous forme d'un liquide homogène. Ce liquide homogène est ensuite lyophilisé pour donner un liquide visqueux.

Ce liquide est mis à précipiter dans le 1,1,1,3,3-pentafluorobutane pour donner 45,1 g de cire cristallisant à 26°C (Rendement=72%).

L'analyse SEC (THF, 30°C, étalon polystyrène) montre un signal correspondant à une masse molaire moyenne en nombre de 12 000 g/mol, l'indice de polymolécularité étant de 2,05.

### EXEMPLE 8

Dans des conditions similaires à celles de l'exemple 4, sont introduits dans l'autoclave, 0,62 g (1,4 mmol) de C₆F₁₃I, 10 g (0,0156 mol) de VDF, 17,6 g (0,0275 mol) de monomère préparé à l'exemple 3 et 0,99 g (3,6 mmol) de persulfate de potassium. Le réacteur est progressivement chauffé jusqu'à 80°C et ce pendant 10 heures. La pression maximale est de 28 bars puis chute jusqu'à 9 bars. Après refroidissement et dégazage, le réacteur est ouvert et la poudre est filtrée, lavée au méthanol, solubilisée dans l'acétone et précipitée dans 500 mL de pentane froid. On obtient, à l'issue de ces opérations, 9,2 g de poudre blanche. Le rendement est de 33%.

Les analyses RMN ¹H et ¹⁹F ont permis de déterminer que 89% molaire de VDF et 11% molaire de monomère de l'exemple 3 ont été incorporés dans le copolymère.

L'analyse SEC (THF, 30°C, étalon polystyrène) montre un signal correspondant à une masse molaire moyenne en nombre de 2500 g/mol, l'indice de polymolécularité étant de 1,7.

### EXEMPLE 9

Dans un autoclave de 100 mL préalablement laissé sous vide durant 30 minutes, sont introduits 8,0 g (27,9 mmol) de monomère préparé selon l'exemple 3, 700 mg (3,02 mmol) d'amorceur peroxypivalate de tert-butyle dans 70% d'isododécane dissous dans 60 g de 1,1,1,3,3-pentafluorobutane et 10 g (0,156 mol) de fluorure de vinylidène.

Le rapport molaire initial VDF/monomère de l'exemple 1 est de 85/15 mol/mol. Le réacteur est chauffé de façon progressive sous agitation jusqu'à 74°C, température à laquelle une pression de 11 bars est observée. Cette température est maintenue constante pendant 17 heures, durant lesquelles la pression chute de 4 bars. Après refroidissement à température ambiante, le réacteur est placé dans un bain de glace.

Après ouverture du réacteur, le solvant du brut réactionnel est évaporé, le résidu repris dans l'acétone puis précipité dans le pentane froid conduisant à un élastomère jaune clair.

Après isolement et séchage sous vide (à 40 mbars) à 50°C pendant 6 heures, une cire jaune est obtenue avec un rendement de 55% (10,0 g).

Les analyses RMN ¹⁹F ont permis de déterminer que 64% molaire de VDF et 46% molaire de monomère de l'exemple 3 ont été incorporés dans le copolymère.

## Revendications

1. Procédé de préparation d'un copolymère comprenant au moins un motif répétitif répondant à la formule (I) suivante : 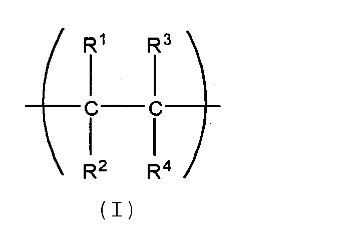 dans laquelle :
- R¹, R², R³ et R⁴ représentent indépendamment un atome d'hydrogène, un atome d'halogène, un groupe perfluoroalkyle ou un groupe perfluoroalcoxy, à condition que l'un au moins des groupes R¹ à R⁴ représente un atome de fluor, un groupe perfluoroalkyle ou un groupe perfluoroalcoxy,
et comprenant au moins un motif répétitif répondant à la formule (II) suivante : 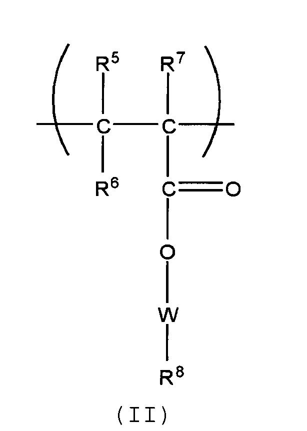 dans laquelle :
*R⁵, R⁶, R⁷ représentent, indépendamment, un atome d'hydrogène, un atome d'halogène, un groupe alkyle, un groupe perfluoroalkyle, sous réserve que l'un au moins des groupes R⁵ à R⁷ représente un atome de fluor ou un groupe perfluoroalkyle ;
*W représente un groupe polyoxyalkylène ; et
*R⁸ représente un groupe alkyle ou un atome d'hydrogène,
ledit procédé comprenant une étape de copolymérisation d'au moins un monomère de formule (III) suivante : 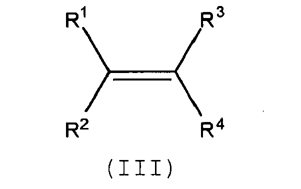 et d'au moins un monomère de formule (IV) suivante : 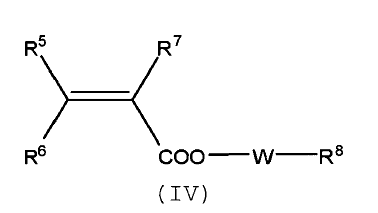 les groupes R¹, R², R³, R⁴, R⁵, R⁶, R⁷, W et R⁸ étant tels que définis ci-dessus.

2. Procédé selon la revendication 1, dans lequel au moins deux des groupes R¹ à R⁴ représentent des atomes de fluor.

3. Procédé selon la revendication 1 ou 2, dans lequel R¹ et R² représentent un atome d'hydrogène et R³ et R⁴ représentent un atome de fluor.

4. Procédé selon l'une quelconque des revendications précédentes, dans lequel W est un groupe polyoxéthylène.

5. Procédé selon l'une quelconque des revendications précédentes, dans lequel R ⁷ représente un groupe perfluoroalkyle et R⁸ représente un groupe alkyle.

6. Procédé selon la revendication 5, dans lequel R⁷ représente un groupe -CF₃.

7. Procédé selon l'une quelconque des revendications précédentes, dans lequel R⁵ et R⁶ représentent un atome d'hydrogène.

8. Copolymère susceptible d'être obtenu par un procédé tel que défini selon l'une quelconque des revendications 1 à 7, comprenant au moins un motif répétitif répondant à la formule (I) suivante : 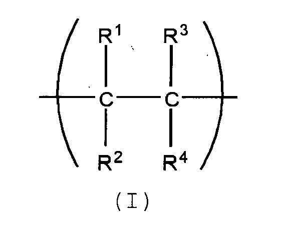 dans laquelle :
- R¹, R², R³ et R⁴ représentent indépendamment un atome d'hydrogène, un atome d'halogène, un groupe perfluoroalkyle ou un groupe perfluoroalcoxy, à condition que l'un au moins des groupes R¹ à R⁴ représente un atome de fluor, un groupe perfluoroalkyle ou un groupe perfluoroalcoxy,
et comprenant au moins un motif répétitif répondant à la formule (II) suivante : 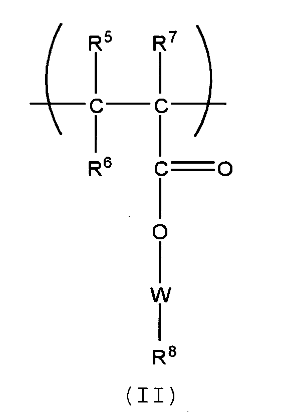 dans laquelle :
*R⁵, R⁶, R⁷ représentent, indépendamment, un atome d'hydrogène, un atome d'halogène, un groupe alkyle, un groupe perfluoroalkyle, sous réserve que l'un au moins des groupes R⁵ à R⁷ représente un atome de fluor ou un groupe perfluoroalkyle ;
*W représente un groupe polyoxyalkylène ; et
*R⁸ représente un groupe alkyle ou un atome d'hydrogène.

9. Copolymère selon la revendication 8, dans lequel au moins deux des groupes R¹ à R⁴ représentent des atomes de fluor.

10. Copolymère selon la revendication 8 ou 9, dans lequel R¹ et R² représentent un atome d'hydrogène et R³ et R⁴ représentent un atome de fluor.

11. Copolymère selon l'une quelconque des revendications 8 à 10, dans lequel W est un groupe polyoxéthylène.

12. Copolymère selon l'une quelconque des revendications 8 à 11, dans lequel R⁷ représente un groupe perfluoroalkyle et R⁸ représente un groupe alkyle.

13. Copolymère selon la revendication 12, dans lequel R⁷ représente un groupe -CF₃.

14. Copolymère selon l'une quelconque des revendications 8 à 13, dans lequel R⁵ et R⁶ représentent un atome d'hydrogène.

15. Monomère répondant à la formule (IV) suivante : 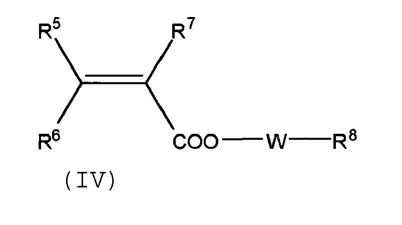 dans laquelle les groupes R⁵, R⁶, R⁷, R⁸ et W sont tels que définis aux revendications 1 à 7.

## Patentansprüche

1. Verfahren zur Herstellung eines Copolymers, das wenigstens eine der folgenden Formel (I) entsprechende, sich wiederholende Struktureinheit umfasst: 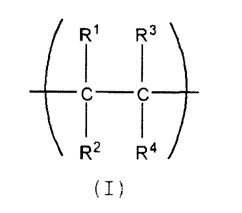 worin:
- R¹, R², R³ und R⁴ unabhängig ein Wasserstoffatom, ein Halogenatom, eine Perfluoralkylgruppe oder eine Perfluoralkoxygruppe bedeuten, mit der Maßgabe, dass wenigstens eine der Gruppen R¹ bis R⁴ ein Fluoratom, eine Perfluoralkylgruppe oder eine Perfluoralkoxygruppe bedeutet,
und das wenigstens eine der folgenden Formel (II) entsprechende, sich wiederholende Struktureinheit umfasst: 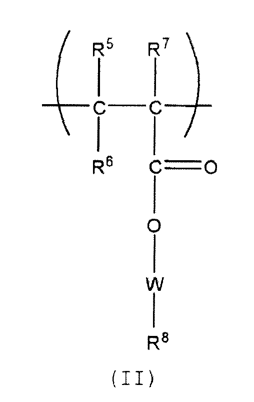 worin:
*R⁵, R⁶, R⁷ unabhängig ein Wasserstoffatom, ein Halogenatom, eine Alkylgruppe oder eine Perfluoralkylgruppe bedeuten, mit der Maßgabe, dass wenigstens eine der Gruppen R⁵ bis R⁷ ein Fluoratom oder eine Perfluoralkylgruppe bedeutet;
*W eine Polyoxyalkylengruppe bedeutet und
*R⁸ eine Alkylgruppe oder ein Wasserstoffatom bedeutet,
wobei das Verfahren einen Schritt der Copolymerisation wenigstens eines Monomers der folgenden Formel (III): 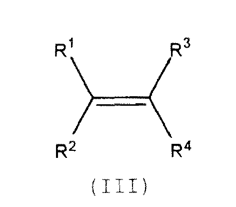 und wenigstens eines Monomers der folgenden Formel (IV) umfasst: 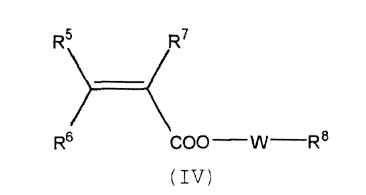 wobei die Gruppen R¹, R², R³, R⁴, R⁵, R⁶, R⁷, W und R⁸ wie vorstehend definiert sind.

2. Verfahren gemäß Anspruch 1, wobei wenigstens zwei der Gruppen R¹ bis R⁴ Fluoratome bedeuten.

3. Verfahren gemäß Anspruch 1 oder 2, wobei R¹ und R² ein Wasserstoffatom bedeuten und R³ und R⁴ ein Fluoratom bedeuten.

4. Verfahren gemäß einem der vorangehenden Ansprüche, wobei W eine Polyoxyethylengruppe ist.

5. Verfahren gemäß einem der vorangehenden Ansprüche, wobei R⁷ eine Perfluoralkylgruppe bedeutet und R⁸ eine Alkylgruppe bedeutet.

6. Verfahren gemäß Anspruch 5, wobei R⁷ eine Gruppe -CF₃ bedeutet.

7. Verfahren gemäß einem der vorangehenden Ansprüche, wobei R⁵ und R⁶ ein Wasserstoffatom bedeuten.

8. Copolymer, das durch ein gemäß einem der Ansprüche 1 bis 7 definierten Verfahren erhältlich ist und wenigstens eine der folgenden Formel (I) entsprechende, sich wiederholende Struktureinheit umfasst: 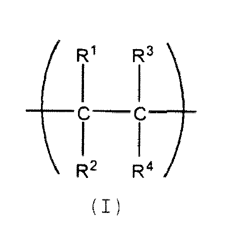 worin:
- R¹, R², R³ und R⁴ unabhängig ein Wasserstoffatom, ein Halogenatom, eine Perfluoralkylgruppe oder eine Perfluoralkoxygruppe bedeuten, mit der Maßgabe, dass wenigstens eine der Gruppen R¹ bis R⁴ ein Fluoratom, eine Perfluoralkylgruppe oder eine Perfluoralkoxygruppe bedeutet,
und das wenigstens eine der folgenden Formel (II) entsprechende, sich wiederholende Struktureinheit umfasst: 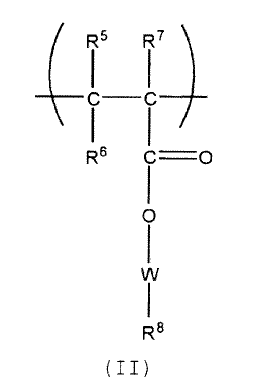 worin:
*R⁵, R⁶, R⁷ unabhängig ein Wasserstoffatom, ein Halogenatom, eine Alkylgruppe oder eine Perfluoralkylgruppe bedeuten, mit der Maßgabe, dass wenigstens eine der Gruppen R⁵ bis R⁷ ein Fluoratom oder eine Perfluoralkylgruppe bedeutet;
*W eine Polyoxyalkylengruppe bedeutet und
*R⁸ eine Alkylgruppe oder ein Wasserstoffatom bedeutet.

9. Copolymer gemäß Anspruch 8, wobei wenigstens zwei der Gruppen R¹ bis R⁴ Fluoratome bedeuten.

10. Copolyme gemäß Anspruch 8 oder 9, wobei R¹ und R² ein Wasserstoffatom bedeuten und R³ und R⁴ ein Fluoratom bedeuten.

11. Copolymer gemäß einem der Ansprüche 8 bis 10, wobei W eine Polyoxyethylengruppe ist.

12. Copolymer gemäß einem der Ansprüche 8 bis 11, wobei R⁷ eine Perfluoralkylgruppe bedeutet und R⁸ eine Alkylgruppe bedeutet.

13. Copolymer gemäß Anspruch 12, wobei R⁷ eine Gruppe -CF₃ bedeutet.

14. Copolymer gemäß einem der Ansprüche 8 bis 13, wobei R⁵ und R⁶ ein Wasserstoffatom bedeuten.

15. Monomer entsprechend der folgenden Formel (IV): 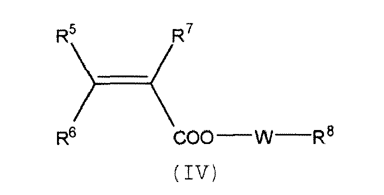 wobei die Gruppen R⁵, R⁶, R⁷, R⁸ und W wie in den Ansprüchen 1 bis 7 definiert sind.

## Claims

1. A method for preparing a copolymer comprising at least one recurrent unit fitting the following formula (I): 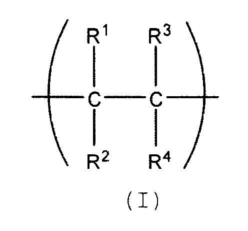 wherein:
- R¹, R², R³ and R⁴ represent independently a hydrogen atom, a halogen atom, a perfluoroalkyl group or a perfluoroalkoxy group, provided that at least one of the groups R¹ to R⁴ represents a fluorine atom, a perfluoroalkyl group or a perfluoroalkoxy group,
and comprising at least one recurrent unit fitting the following formula (II): 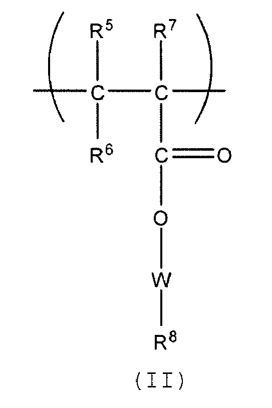 wherein:
*R⁵, R⁶, R⁷ represent independently a hydrogen atom, a halogen atom, an alkyl group, a perfluoroalkyl group, with the proviso that at least one of the groups R⁵ to R⁷ represents a fluorine atom or a perfluoroalkyl group;
*W represents a polyoxyalkylene group; and
*R⁸ represents an alkyl group or a hydrogen atom,
said method comprising a step for copolymerizing at least one monomer of following formula (III): 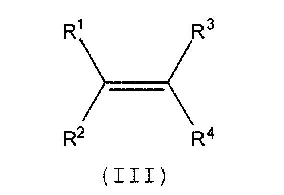 and of at least one monomer of the following formula (IV): 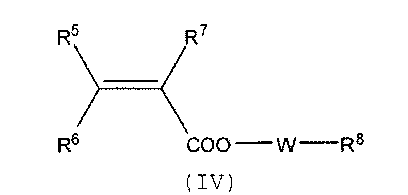 the groups R¹, R², R³, R⁴, R⁵, R⁶, R⁷, Wand R⁸ being as defined above.

2. The method according to claim 1, wherein at least two of the groups R¹ to R⁴ represent fluorine atoms.

3. The method according to claim 1, wherein R¹ and R² represent a hydrogen atom and R³ and R⁴ represent a fluorine atom.

4. The method according to claim 1, wherein W is a polyoxyethylene group.

5. The method according to claim 1, wherein R⁷ represents a perfluoroalkyl group and R⁸ represents an alkyl group.

6. The method according to claim 5, wherein R⁷ represents a group -CF₃.

7. The method according to claim 1, wherein R⁵ and R⁶ represent a hydrogen atom.

8. A copolymer which may be obtained by a method as defined according to claim 1, comprising at least one recurrent unit fitting the following formula (I) : 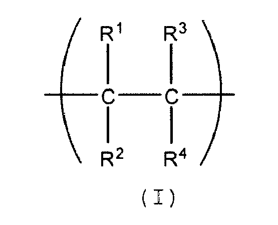 wherein:
- R¹, R², R³ and R⁴ represent independently a hydrogen atom, a halogen atom, a perfluoroalkyl group or a perfluoroalkoxy group, provided that at least one of the groups R¹ to R⁴ represents a fluorine atom, a perfluoroalkyl group or a perfluoroalkoxy group,
and comprising at least one recurrent unit fitting the following formula (II): 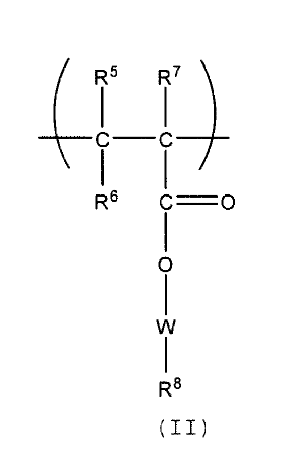 wherein:
*R⁵, R⁶, R⁷ represents independently a hydrogen atom, a halogen atom, an alkyl group, a perfluoroalkyl group, with the proviso that at least one of the groups R⁵ to R⁷ represents a fluorine atom or a perfluoroalkyl group;
*W represents a polyoxyalkylene group; and
*R⁸ represents an alkyl group or a hydrogen atom.

9. The copolymer according to claim 8, wherein at least two of the groups R¹ to R⁴ represent fluorine atoms.

10. The copolymer according to claim 8, wherein R¹ and R² represent a hydrogen atom and R³ and R⁴ represent a fluorine atom.

11. The copolymer according to claim 8, wherein W is a polyoxyethylene group.

12. The copolymer according to claim 8, wherein R⁷ represents a perfluoroalkyl group and R⁸ represents an alkyl group.

13. The copolymer according to claim 12, wherein R⁷ represents a group -CF₃.

14. The copolymer according to claim 8, wherein R⁵ and R⁶ represent a hydrogen atom.

15. A monomer fitting the following formula (IV) : 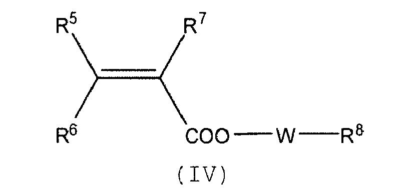 wherein the groups R⁵, R⁶, R⁷, R⁸ and W are as defined in claim 1.
